# EUROPEAN PATENT SPECIFICATION

(11) **EP 2 409 893 B1**
(45) Date of publication and mention of the grant of the patent: **27.01.2016**
(21) Application number: 11380009.8
(22) Date of filing: 15.02.2011
(51) Int. Cl.: B62B 9/20, F16C 11/10

(54) **A lockable handlebar articulation for baby pushchairs**
Arretierbares Lenkstangengelenk für Kinderwagen
Articulation de guidon verrouillable pour poussettes de bébé

(30) Priority: 19.07.2010 ES 201030748 U
(43) Date of publication of application: 25.01.2012
(73) Proprietor: JANE, S.A., 08184 Palau Solità i Plegamans Barcelona (ES)
(72) Inventor: Jane Santamaria, Manuel, 08184 Palau Solità I Plegamans Barcelona (ES)
(74) Representative: Morgades y Manonelles, Juan Antonio

(56) References cited:
- DE-U1- 20 013 739
- US-A- 4 834 403

## Description

### OBJECT OF THE INVENTION

A lockable handlebar articulation for baby pushchairs.

### BACKGROUND OF THE INVENTION

This lockable handlebar articulation can be used in baby pushchairs with a frame and a crossmember to which the supports of the front and rear wheels and the handlebar are attached.

### SUMMARY OF THE INVENTION

This invention consists of a lockable handlebar articulation for baby pushchairs presenting a simplified design and easily accessible locking action.

For this purpose, the articulation is according to claim 1.

The locking action is achieved by a rod in the mentioned block, which fits selectively into one of the radial cavities in the periphery of the shaft. This rod is pushed by a spring that ensures it fits into the chosen recess of the shaft and is joined to a cable used for unlocking by pulling.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figure 1 shows a perspective exploded view of the components of the articulation, and
figures 2 and 3 represent in transversal and longitudinal section, respectively, the articulation assembly.

### DETAILED DESCRIPTION

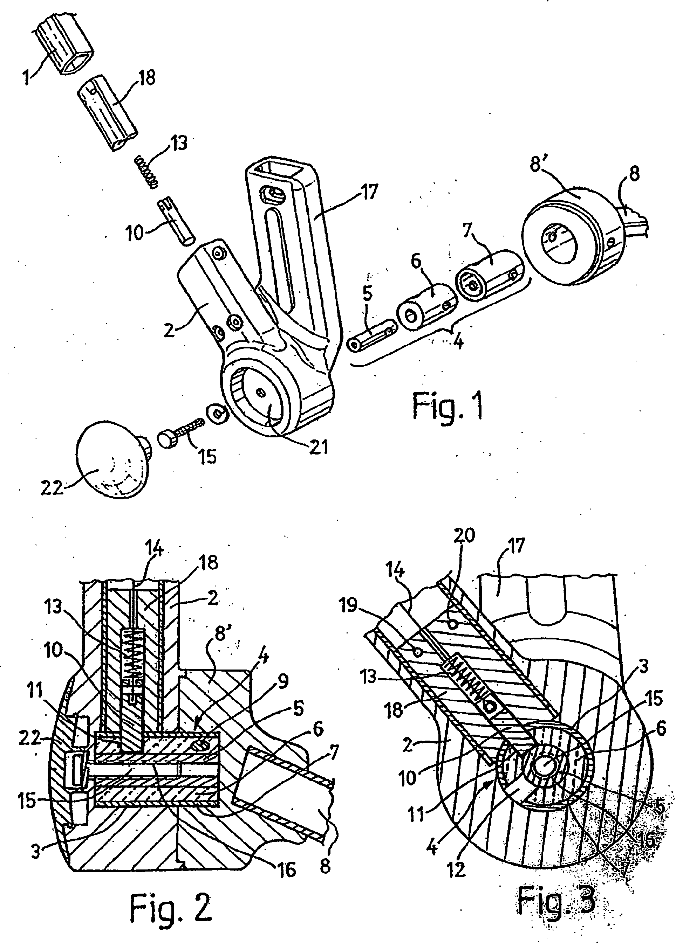

According to the drawings, this lockable handlebar articulation for baby pushchairs comprises a block (2) on the lower end of the sides (1) of the handlebar presenting a cylindrical hole through it (3) in which a fixed shaft is located (4) formed by three bushes (5, 6 and 7) fitted together concentrically, the outside and the inside being made of metal and the intermediate bush made of plastic material, whose fixed shaft (4) is fitted to a crossmember (8) of the pushchair frame by means of a rivet (9) that secures it to a bracket (8') juxtaposed to the block (2) and which is attached to the crossmember (8) (figure 2).

Between these blocks (2) and the shaft (4), there are corresponding means to lock the handlebar in two turning positions, corresponding to the pushchair unfolded and folded.

Said locking means comprise a rod (10) in the mentioned block (2), which fits selectively into one of the radial cavities (11 and 12) (figure 3) in the periphery of the shaft (4).

The rod (10) is pushed by a spring (13) that insures it fits into the chosen recess (11 or 12) of the shaft (4), and is joined to a cable (14), which is used for unlocking by pulling it from the upper part of the sides (1) of the handlebar.

The block (2) is secured on its rotating coupling on the shaft (4), by a transversal screw (15) threaded into a drilled axial hole (16) with a thread in the bush (5) of the shaft (4).

The block (2) has a built in support (17) for the coupling, which can be separated from the seat of the pushchair.

The rod (10) and the spring (13) are located in a bush (18) secured by rivets (19 and 20) in the block (2) (figure 3).

The side area of the block (2) where the screw is inserted (15) forms a recess (21) which is covered by a cap (22).

The invention can within its essentiality be put into practice in other embodiments differing only in detail from the one having been described above only by way of example. This lockable handlebar articulation for baby pushchairs may thus be manufactured in any shape and size, with the most suitable means and materials and with the most convenient accessories, and the components may be replaced by others that are technically equivalent.

## Claims

1. A lockable handlebar articulation for baby pushchairs, having a block (2) on the lower end of the each one of the two handlebar sides, a shaft (4) and a cross member (8) of a pushchair frame, said block having a cylindrical hole going through it and turning on the shaft which is fixed to the cross member of the pushchair frame, the block and the shaft having means to lock the handlebar in at least two positions of rotation, **characterized in that** a support (17) is integrated in the block for a detachable fitting of a seat of the pushchair and **in that** the shaft (4) is formed by three bushes (5, 6, 7) fitted together concentrically.

2. A lockable handlebar articulation for baby pushchairs, according to claim 1, **characterised in that** the block (2) is secured with the possibility of rotation on the shaft (4) by a transversal screw (15) threaded into a drilled axial hole with a thread on the innermost bush (5) of the shaft (4).

## Patentansprüche

1. Arretierbares Gelenk für Kinderwagenlenker, bestehend aus einem Block (2) am unteren Ende jeder der beiden Seiten des Lenkers, einer Achse (4) und einem Querträger (8) eines Kinderwagengestells, wobei der Block eine zylindrische durch ihn hindurch verlaufende Öffnung aufweist und auf der am Querträger des Kinderwagengestells befestigten Achse drehbar ist und wobei der Block und die Achse Mittel zum Arretieren des Lenkers in mindestens zwei Drehpositionen aufweisen, **dadurch gekennzeichnet, dass** zum Zwecke der lösbaren Befestigung eines Kinderwagensitzes eine Halterung (17) in den Block integriert ist und dass die Achse (4) aus drei konzentrisch zusammengefügten Hülsen (5, 6, 7) besteht.

2. Arretierbares Gelenk für Kinderwagenlenker nach Anspruch 1, **dadurch gekennzeichnet, dass** der Block (2) drehbar auf der Achse (4) gesichert ist, und zwar durch eine Querschraube (15), die über eine axiale Gewindebohrung in die innerste Hülse (5) der Achse (4) eingeschraubt wird.

## Revendications

1. Une articulation de guidon verrouillable pour poussettes de bébé, comprenant un bloc (2) sur l'extrémité inférieure de chacune des deux parties de guidon, une tige (4) et un élément transversal (8) d'un châssis de poussette, ledit bloc comportant un trou cylindrique qui le traverse et tournant sur la tige qui est fixée à l'élément transversal du châssis de la poussette, le bloc et la tige ayant des moyens pour verrouiller le guidon dans au moins deux positions de rotation, **caractérisée en ce qu'**un support (17) est intégré dans le bloc pour l'adaptation amovible d'un siège de la poussette et **en ce que** la tige (4) est formée par trois douilles (5, 6, 7) montées ensemble concentriquement.

2. Une articulation de guidon verrouillable pour poussettes de bébé, conformément à la revendication 1, **caractérisée en ce que** le bloc (2) est fixé avec la possibilité de rotation sur la tige (4) par une vis transversale (15) vissée dans un trou axial percé avec un filetage sur la douille intérieure (5) de la tige (4).
